(19) Europäisches Patentamt
European Patent Office
Office européen des brevets

(11) **EP 4 296 915 A1**

(12) **EUROPEAN PATENT APPLICATION**

(43) Date of publication:
**27.12.2023 Bulletin 2023/52**

(21) Application number: **23161173.2**

(22) Date of filing: **10.03.2023**

(51) International Patent Classification (IPC):
**G06Q 10/04** *(2023.01)*    **G06Q 10/0833** *(2023.01)*

(52) Cooperative Patent Classification (CPC):
**G06Q 10/0833; G06Q 10/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.06.2022 JP 2022100586**

(71) Applicant: **Fujitsu Limited**
**Kawasaki-shi, Kanagawa 211-8588 (JP)**

(72) Inventors:
• **IGARASHI, Shinsa**
**Kawasaki-shi, Kanagawa, 211-8588 (JP)**
• **SEGAWA, Eigo**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **MOVING MEANS ESTIMATING METHOD, MOVING MEANS ESTIMATING PROGRAM, AND MOVING MEANS ESTIMATION DEVICE**

(57) A moving means estimating method includes: calculating(S302) first data in which a selection frequency for moving means in a loss section where location information of a user terminal is lost is calculated for each category of the moving means; calculating(S303) second data in which a selection frequency for moving means of an individual user having the user terminal is calculated for each category of the moving means; and synthesizing(S305) the selection frequency for the moving means in the first data with the selection frequency for the moving means in the second data, based on a difference between the selection frequency for the moving means in the first data and the selection frequency for the moving means in the second data.

**Description**

[Technical Field]

The embodiments discussed herein are related to a method for estimating moving means and a computer program for estimating moving means.

[Background Art]

As the number of services with user location information increases, the importance of technology to estimate moving means of a user is increasing.

Global positioning system (GPS) data is used as an example of the user location information to estimate the moving means of the user, but GPS data may be lost due to poor radio wave conditions.

Statistical data may be used to estimate moving means of an individual user in such a data loss section. For example, a history of moving means corresponding to two points of a point at which data loss began and a point at which the data loss was ended is extracted out of history data in which histories of estimation results of moving means of all of the users is accumulated. For each history extracted in this way, the number of times of selection for the moving means selected by the user is totaled from the history. As a result, statistical data in which a selection frequency for individual moving means relative to a total number of histories in a data loss section is calculated for each moving means. Based on the assumption that such statistical data coincides with personal data on the selection frequency for the moving means of the user in the data loss section, an estimation result of the moving means of the individual user in the data loss section is output on the basis of the statistical data. The related technologies are described, for example, in: Japanese Laid-open Patent Publication No. 2012-221354, and Japanese Laid-open Patent Publication No. 2020-160960.

[Summary of invention]

[Technical Problem]

However, the above statistical data is only statistics and corresponds to group trends, and does not always correspond to individual characteristics of a user. For example, statistics easily reflect external factors such as convenience and economy, while it is difficult to reflect internal factors such as personal interest and liking, for example, preference and particularity about something. Therefore, identifying the above statistical data as an estimation result of moving means of an individual user has an aspect of reducing an accuracy of the estimation of the moving means of the user.

Accordingly, it is an object in one aspect of an embodiment of the present invention to provide moving means estimating method, moving means estimating program, and moving means estimation device that can reasonably reflect personal characteristics of a user to an estimation result of the moving means in a data loss section.

[Solution to Problem]

An aspect of a moving means estimating method includes: first calculating first data in which a selection frequency for moving means in a loss section where location information of a user terminal is lost is calculated for each category of the moving means, by totaling the number of times of selection corresponding to categories of moving means for each history that corresponds to the loss section, in history data in which a combination of blocks into which an area is divided is associated with a history of the moving means; second calculating second data in which a selection frequency for moving means of an individual user having the user terminal is calculated for each category of the moving means, by totaling the number of times of selection corresponding to categories of moving means for each history that corresponds to the user terminal, in the history data; and synthesizing the selection frequency for the moving means in the first data with the selection frequency for the moving means in the second data, based on a difference between the selection frequency for the moving means in the first data and the selection frequency for the moving means in the second data.

[Advantageous Effects of Invention]

The personal characteristics of the user can be reasonably reflected to the estimation result of the moving means in the data loss section.

[Brief Description of Drawings]

FIG. 1 is a block diagram illustrating a functional configuration example of a server device;
FIG. 2 is a diagram illustrating an example of data loss;
FIG. 3 is a diagram illustrating an example of statistical data;
FIG. 4 is a diagram (1) illustrating a comparative example of statistical data and personal data;
FIG. 5 is a diagram (2) illustrating a comparative example of statistical data and personal data;
FIG. 6 is a schematic diagram illustrating an aspect of a problem and solution approach;
FIG. 7 is a diagram illustrating an example of blocks;
FIG. 8 is a diagram illustrating an example of block data;
FIG. 9 is a schematic diagram illustrating an example of generating second history data;
FIG. 10 is a schematic diagram illustrating an example of extracting a selection frequency for moving means;
FIG. 11 is a schematic diagram illustrating an example of synthesizing selection frequencies for moving means;
FIG. 12 is a flowchart illustrating processing of all of the processes;
FIG. 13 is a flowchart illustrating processing of a second moving means estimation process; and
FIG. 14 is a diagram illustrating a configuration example of hardware.

[Embodiments for Carrying Out the Invention]

Preferred embodiments will be explained with reference to accompanying drawings. Each embodiment merely illustrates one example or aspect, and a range of values or functions, and usage scenarios are not limited to such an example. The embodiments can be combined as appropriate to the extent that processing contents are not contradictory.

First Embodiment

Overall Configuration

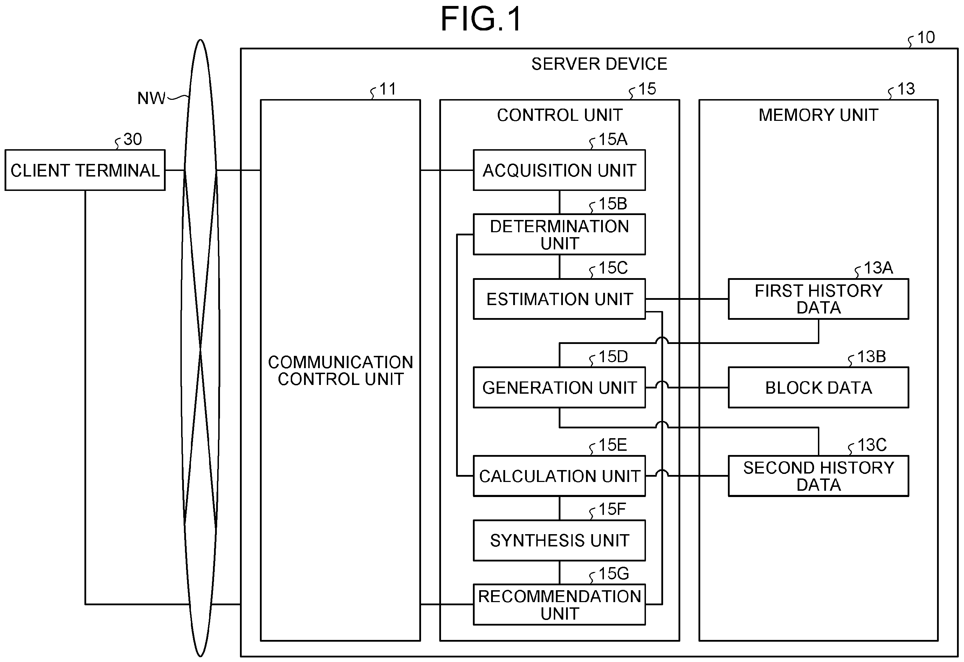

FIG. 1 is a block diagram illustrating a functional configuration example of a server device 10. The server device 10 illustrated in FIG. 1 provides a moving means estimation function that estimates moving means of a user having a client terminal 30 based on location information of the client terminal 30, and a recommendation function that outputs stores or the like, as a recommendation corresponding to the moving means of the user.

The server device 10 is an example of a computer that provides the above-described moving means estimation function and the above-described recommendation function. For example, the server device 10 can be implemented as a server for providing the above-described moving means estimation function and the above-described recommendation function on-premise. In addition, the server device 10 can be implemented as a Platform as a Service (PaaS) type application or a Software as a Service (SaaS) type application to provide the above-described moving means estimation function and the above-described recommendation function as cloud services.

The server device 10 can be communicatively connected to the client terminal 30 via a network NW, as illustrated in FIG. 1. For example, the network NW may be any type of communication network, whether wired or wireless, such as the Internet or a local area network (LAN). Although FIG. 1 illustrates an example in which one client terminal 30 is connected to one server device 10, any number of client terminals 30 may be connected without restriction.

The client terminal 30 is an example of a computer to which the above-described moving means estimation function and the above-described recommendation function are provided. For example, the client terminal 30 may be implemented as a mobile terminal device such as a smartphone, a tablet terminal, or a wearable terminal.

Here, two functions of the above-described moving means estimation function and the above-described recommendation function are provided as a package, but each function may be provided as a module. In this case, different physical machines may provide each of the functions or different virtual machines may provide each of the functions.

In addition, an example in which the above-described moving means estimation function and the above-described recommendation function are provided as a service is illustrated in FIG. 1, which is only an example. For example, an application running on the client terminal 30 may cause the client terminal 30 to execute the above-described moving means estimation function and the above-described recommendation function.

Aspect of Background Technology

As explained in the section of BACKGROUND, GPS data may be used as an example of the location information of the user to estimate the moving means of the user, but the GPS data may be lost due to poor reception conditions.

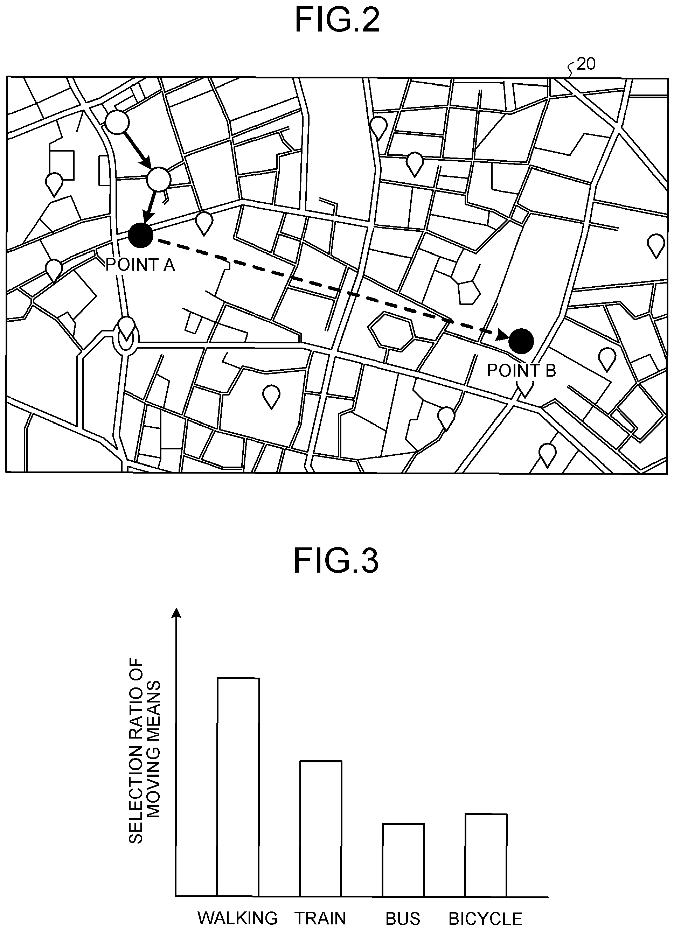

FIG. 2 is a diagram illustrating an example of data loss. In FIG. 2, a map 20 corresponding to an area is illustrated as only an example. As illustrated in FIG. 2, location information of the client terminal 30 is plotted with circular marks on the map 20. The individual circular marks plotted on the map 20 are connected by arrows with an orientation corresponding to the time series. Furthermore, arrows corresponding to sections where location information is successfully acquired are indicated by solid lines, while an arrow corresponding to a section where location information is lost due to failure to obtain the location information (hereinafter referred to as a "data loss section") is indicated by a dashed line. In this regard, a point A, which is the last location at which location information was successfully acquired immediately before loss of location information began, and a point B, which is the first location at which location information was successfully acquired immediately after the loss of the location information ended, are indicated by black circles, while the other points are indicated by white circles.

Here, in a case in which the above-described recommendation function is used at the point B, which is the latest location information, a recommendation appropriate for the user depends on the moving means in the data loss section between the point A and the point B. For example, a case in which a store recommendation is performed is exemplified. In this case, assuming that the moving means is a "car", information about stores with a parking lot is more valuable to the user than information about stores without a parking lot. In addition, assuming that the moving means is a "train", information about stores near a station is more valuable to the user than information about stores far from a station. In this regard, it can be said that estimating the moving means in the data loss section has the great technical significance.

Statistical data may be used to estimate moving means of an individual user in such a data loss section. For example, a history of moving means corresponding to two points of a point at which data loss began and a point at which the data loss was ended is extracted out of history data in which histories of estimation results of moving means of all of the users is accumulated. For each history extracted in this way, the number of times of selection for the moving means selected by the user is totaled from the history. As a result, statistical data in which a selection frequency for individual moving means relative to a total number of histories in a data loss section is calculated for each moving means. Based on the assumption that such statistical data coincides with personal data on the selection frequency for the moving means in the data loss section, an estimation result of the moving means of the individual user in the data loss section is output on the basis of the statistical data.

FIG. 3 is a diagram illustrating an example of statistical data. FIG. 3 illustrates the statistical data generated based on a history of moving means corresponding to the data loss section between the point A and the point B illustrated in FIG. 2, the history being out of histories of estimation results of moving means of all of the users. As illustrated in FIG. 3, the statistical data is visualized as a bar graph illustrating a selection frequency for moving means of each of "walking", "train", "bus", and "bicycle" out of the total number of histories in the data loss section at the point A and the point B.

Aspect of Problem

However, the above statistical data is only statistics and corresponds to group trends, and does not always correspond to individual characteristics of a user. For example, there is an aspect in which statistics easily reflect external factors such as convenience and economy, while it is difficult to reflect internal factors such as personal interest and liking, for example, preference or particularity about something. According to such an aspect, identifying the above statistical data as an estimation result of the moving means of the user has an aspect of reducing an accuracy of the estimation of the moving means of the user.

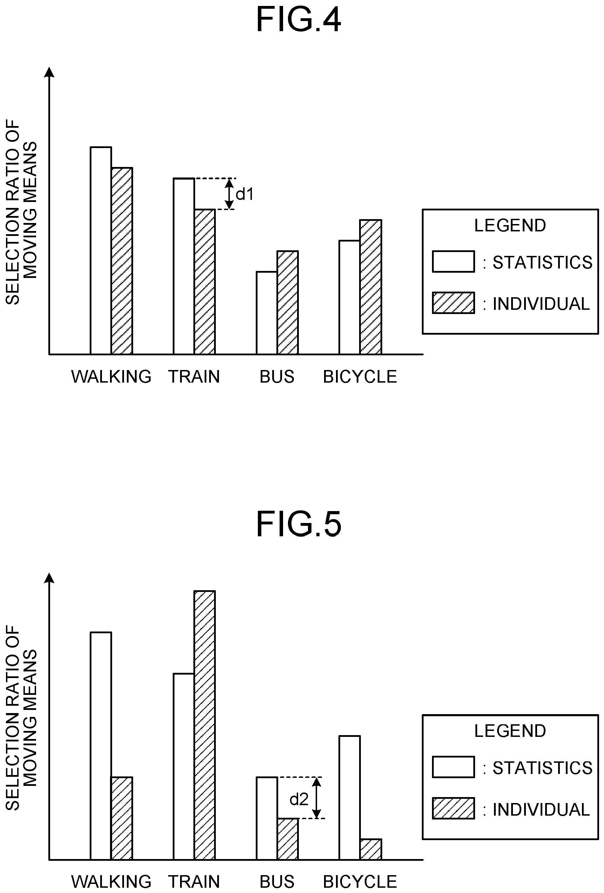

FIG. 4 and FIG. 5 are diagrams (1) and (2) illustrating comparison examples of statistical data and personal data. FIG. 4 and FIG. 5 illustrate the statistical data generated based on a history of moving means corresponding to the section between the point A and the point B illustrated in FIG. 2, the history being out of histories of estimation results of moving means of all of the users. In addition, FIG. 4 and FIG. 5 illustrate personal data generated based on a history of moving means of an individual user corresponding to the section between the point A and the point B illustrated in FIG. 2. In addition, in FIG. 4 and FIG. 5, selection frequencies in the individual moving means based on the statistical data are illustrated as white bars, while selection frequencies in the individual moving means based on the personal data are illustrated as shaded hatched bars. In FIG. 4 and FIG. 5, assuming that the personal data is present for the convenience of explanation for comparing the statistical data and the personal data in the data loss section, the personal data is exemplified.

Based on the comparison of the statistical data and the personal data illustrated in FIG. 4, it is clear that differences in the selection frequencies for the individual moving means are small. This is clarified from the fact that a maximum value d1 of a difference in a selection frequency for the "train" out of the differences in the selection frequencies for the individual moving means illustrated in FIG. 4 is smaller than a minimum value d2 of a difference in a selection frequency for the "bus" out of the differences in the selection frequencies for the individual moving means illustrated in FIG. 5. In this case, it can be said that the negative impact on the estimation accuracy for the moving means of the user is small because the differences in the selection frequencies for individual moving means between the statistical data and the personal data are small even though the statistical data is identified as the estimation result of the moving means of the user.

By contrast, based on the comparison of the statistical data and the personal data illustrated in FIG. 5, it is clear that differences in the selection frequencies for the individual moving means are large. This is clear from the fact that the minimum value d2 of the difference in the selection frequency for the "bus" out of the differences in the selection frequencies for the individual moving means illustrated in FIG. 5 is larger than the maximum value d1 of the difference in the selection frequency for the "train" out of the differences in the selection frequencies for the individual moving means illustrated in FIG. 4. In this case, it is clear that the negative impact on the estimation accuracy for the moving means of the user is large because the differences in the selection frequencies for individual moving means between the statistical data and the personal data are large in the case in which the statistical data is identified as the estimation result of the moving means of the user.

Aspect of Problem and Solution Approach

The moving means estimation function according to the present embodiment sets a blend ratio of a selection frequency for moving means in the statistical data corresponding to the data loss section and a selection frequency for moving means in all of the histories of the individual user, according to the differences in the selection frequencies for the moving means between the statistical data and the personal data.

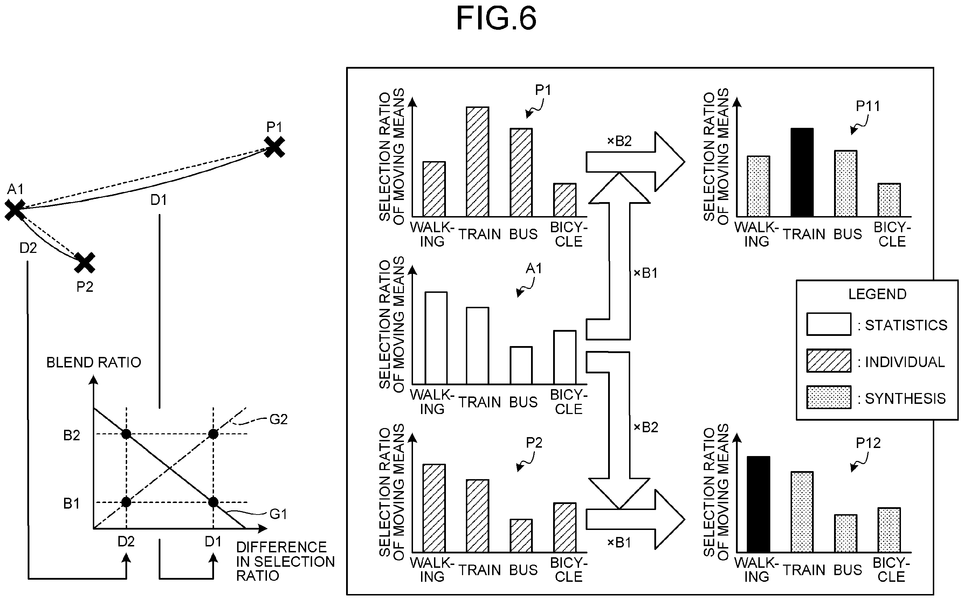

FIG. 6 is a schematic diagram illustrating an aspect of a problem and solution approach. In FIG. 6, a graph G1, which illustrates an example of a relationship between the differences in the selection frequencies for the moving means between the statistical data and the personal data and the blend ratio of the statistical data, is illustrated as the solid line. Furthermore, in FIG. 6, a graph G2, which illustrates an example of a relationship between the differences in the selection frequencies for the moving means between the statistical data and the personal data and the blend ratio of the personal data, is illustrated as the dashed-dotted line.

According to the graph G1 illustrated in FIG. 6, it is defined that the blend ratio at which the statistical data is synthesized is set lower as the differences in the selection frequencies for the moving means between the statistical data and the personal data increase. On the other hand, according to the graph G2 illustrated in FIG. 6, it is defined that the blend ratio at which the personal data is synthesized is set higher as the differences in the selection frequencies for the moving means between the statistical and the personal data increase.

An example of personal data P1 generated from all of the histories of an individual user U1 is exemplified as only an example. In a case of the user U1, a difference between a selection frequency for moving means in statistical data A1, which is generated from histories of the moving means corresponding to the data loss section between the point A and the point B illustrated in FIG. 2, and a selection frequency for moving means in the personal data P1, which is generated from all of the histories of the individual user U1, is defined as D1. The "statistical data A1" described above may include any number of histories for any user, except that a condition in which the histories are obtained in the same section as the data loss section is satisfied. The "personal data P1" described above preferably exclude histories in the same section as the data loss section, except that a condition in which the histories are histories of moving means of the user U1 is satisfied.

In the case where the difference in the selection frequency is D1, a blend ratio of the statistical data A1 is set to B1 according to the graph G1 illustrated in FIG. 6, while a blend ratio of the personal data P1 is set to B2 (> B1) according to the graph G2 illustrated in FIG. 6.

In a case in which the statistical data A1 and the personal data P1 are synthesized according to the blend ratio "B1" of the statistical data A1 and the blend ratio "B2" of the personal data P1, an estimation result P11 of the selection frequency for the moving means of the individual user U1 in the data loss section is obtained.

In other words, in a case in which the differences in the selection frequencies for the moving means between the statistical data and the personal data are large, the synthesis of the statistical data A1 and the personal data P1, in which the blend ratio at which the statistical data A1 is synthesized is decreased and the blend ratio at which the personal data P1 is synthesized is increased, can be achieved.

As a result, in the case of the user U1, whose personal interest and liking with a large degree of divergence from a group trend, the blend ratio of personal characteristics of the user U1 reflected to the estimation result of the moving means of the user U1 in the data loss section can be increased.

An example of personal data P2 generated from all of the histories of an individual user U2 is exemplified as another example. In a case of the user U2, a difference between a selection frequency for moving means in the statistical data A1, which is generated from the histories of the moving means corresponding to the data loss section between the point A and the point B illustrated in FIG. 2, and a selection frequency for moving means in the personal data P2, which is generated from all of the histories of the individual user U2, is defined as D2. The "personal data P2" described above preferably exclude histories in the same section as the data loss section, except that a condition in which the histories are histories of moving means of the user U2 is satisfied.

In the case where the difference in the selection frequency is D2, a blend ratio of the statistical data A1 is set to B2 according to the graph G1 illustrated in FIG. 6, while a blend ratio of the personal data P2 is set to B1 (< B2) according to the graph G2 illustrated in FIG. 6.

In a case in which the statistical data A1 and the personal data P2 are synthesized according to the blend ratio "B2" of the statistical data A1 and the blend ratio "B1" of the personal data P2, an estimation result P12 of the selection frequency for the moving means of the individual user U2 in the data loss section is obtained.

In other words, in a case in which the differences in the selection frequencies for the moving means between the statistical data and the personal data are small, the synthesis of the statistical data A1 and the personal data P2, in which the blend ratio at which the statistical data A1 is synthesized is increased and the blend ratio at which the personal data P2 is synthesized is decreased, can be achieved.

As a result, in the case of the user U2, whose personal interest and liking with a small degree of divergence from a group trend, the blend ratio of personal characteristics of the user U2 reflected to the estimation result of the moving means of the user U2 in the data loss section can be decreased.

Therefore, according to the present embodiment, the moving means estimation function can reasonably reflect the personal characteristics of the user to the estimation result of the moving means in the data loss section. For example, with the example of the estimation result P11 of the moving means of the user U1 illustrated in FIG. 6, it is clear that a characteristic of the user U1, preferring the train, is reflected in the estimation result of the moving means according to the fact that the first ranked category of the moving means is the "train". In addition, with the example of the estimation result P12 of the moving means of the user U2 illustrated in FIG. 6, it is clear that the estimation result of the moving means of the user U2 can reflect the group trend that tends to use the category "walking" of the moving means according to the fact that the first ranked category of the moving means is the "walking".

Configuration of Server Device 10

Next, a functional configuration example of the server device 10 according to the present embodiment will be described. FIG. 1 is a diagram schematically illustrating blocks related to the moving means estimation function and the recommendation function included in the server device 10. As illustrated in FIG. 1, the server device 10 includes a communication control unit 11, a memory unit 13, and a control unit 15. FIG. 1 is a diagram illustrating only the functional units related to the above-described moving means estimation function and the above-described recommendation function as extracted, and functional units other than those illustrated in the figure may be provided in the server device 10.

The communication control unit 11 is a functional unit that controls communication with other devices such as the client terminal 30. As only an example, the communication control unit 11 can be implemented by a network interface card such as a LAN card. As one aspect, the communication control unit 11 receives location information from the client terminal 30 or outputs recommendations and the like based on the estimation result obtained by the above-described moving means estimation function to the client terminal 30.

The memory unit 13 is a functional unit that stores therein various types of data. As only an example, the memory unit 13 is implemented by an internal, external, or auxiliary storage of the server device 10. For example, the memory unit 13 stores therein first history data 13A, block data 13B, and second history data 13C. The first history data 13A, the block data 13B, and the second history data 13C will be explained together in the section where the reference, generation, or registration is executed.

The control unit 15 is a functional unit that performs overall control of the server device 10. For example, the control unit 15 can be implemented by a hardware processor. In addition, the control unit 15 may be implemented by hardwired logic. As illustrated in FIG. 1, the control unit 15 includes an acquisition unit 15A, a determination unit 15B, an estimation unit 15C, a generation unit 15D, a calculation unit 15E, a synthesis unit 15F, and a recommendation unit 15G.

The acquisition unit 15A is a processing unit that acquires various types of information from the client terminal 30. As only an example, the acquisition unit 15A can acquire location information of the client terminal 30 from an application program running on the client terminal 30. For example, the acquisition unit 15A can execute a process of acquiring location information of the client terminal 30 for each client terminal 30 used by a user subscribing to a service that provides the above-described recommendation function at any timing, for example, once per second, in parallel with other processing. The "location information" described herein may be, as only an example, coordinate information including latitude and longitude measured based on GPS data received by a GPS receiver, but is not limited to location information measured by the GPS function. For example, the location information may be location information measured with radio waves from base stations, beacons from short-range wireless communications, or radio frequency identification (RFID) tags.

The determination unit 15B is a processing unit that determines whether location information is lost or not. As only an example, in a case in which location information is successfully acquired by the acquisition unit 15A, the determination unit 15B determines whether or not there is location information loss before the location information is acquired. For example, the determination unit 15B can determine location information loss based on a threshold value obtained retroactively from the time when the location information was acquired, for example, whether or not the acquisition of the location information has failed for longer than five minutes.

The estimation unit 15C is a processing unit that estimates the moving means of the user. As only an example, the estimation unit 15C operates in a case in which it is determined by the determination unit 15B that there is no location information loss. In this case, the estimation unit 15C estimates the moving means of the user having the client terminal 30 based on time series data on location information including the location information acquired by the acquisition unit 15A and location information for a specific period of time backward from the former location information.

Any known method can be applied to the "estimation of the moving means" described herein. For example, the technique in Reference 1 below for estimating moving means based on the hourly speed of a moving object calculated from time series data on location information can be used. The estimation unit 15C may also estimate the moving means by collating time series data on location information of the user and time series data on location information of users located in the vicinity of the user with a rule base in which a condition related to location information is associated with moving means satisfying the condition. In addition, the estimation unit 15C can also estimate the moving means of the user by using a machine training model that outputs a category of moving means with a feature value, such as time series data on location information or a speed obtained from the time series data of the location information, as an input.

Reference 1: International Publication Pamphlet No. WO 2013/179359

After the moving means is estimated in this manner, the estimation unit 15C determines whether or not an estimation result of the current moving means has changed from an estimation result of previous moving means. In a case in which the estimation result of the current moving means is changed, the estimation unit 15C generates a new entry in which a moving range for a period when the estimation result of the moving means in the same category is obtained is set to one segment. For example, the entry may include items such as identification information of the user, a latitude of a movement source, a longitude of the movement source, a latitude of a movement destination, a longitude of the movement destination, and a category of the moving means. The new entry generated in this way is added to the first history data 13A stored in the memory unit 13.

The generation unit 15D is a processing unit that generates the second history data 13C in which the moving range is managed by a block from the first history data 13A in which the moving range is managed by location information. As only an example, the generation unit 15D can operate at any time independent of the acquisition unit 15A, the determination unit 15B, and the estimation unit 15C. For example, the generation unit 15D can be activated in a case in which a new entry is added to the first history data 13A, and can also be activated at regular or periodic times, or at timings when there is a request from a system administrator or a request from the user.

In the case in which the second history data is generated from the first history data 13A in this way, as only an example, the block data 13B in which the relevant block is defined for each block is referenced.

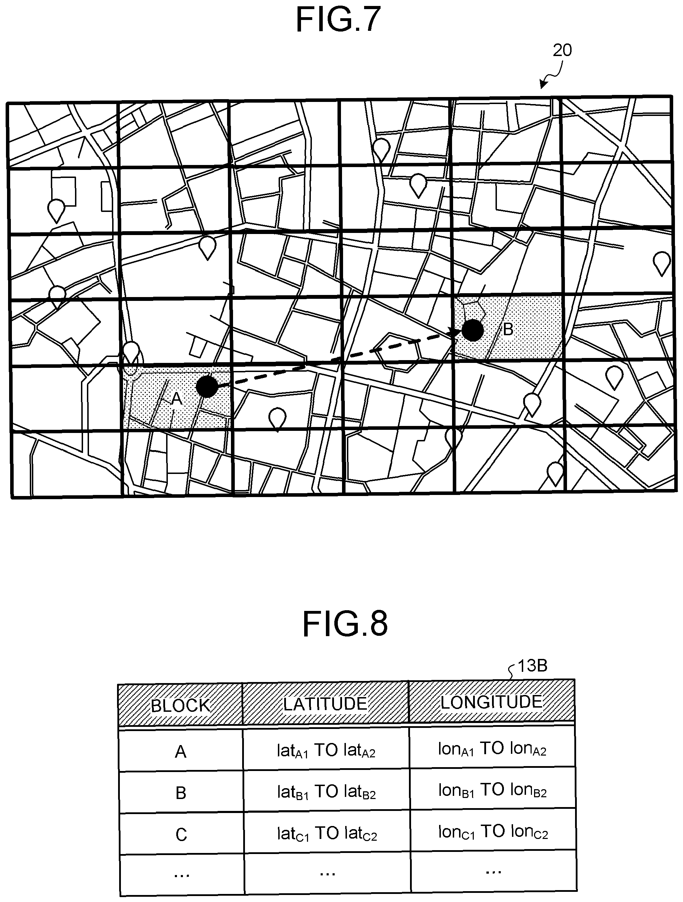

FIG. 7 is a diagram illustrating an example of blocks. In FIG. 7, a map 20 corresponding to an area is illustrated as only an example. As illustrated in FIG. 7, the map 20 is divided into a plurality of blocks, for example, 6×6 (vertical × horizontal). The block data 13B is generated according to a result of such dividing of the blocks. In FIG. 7, although an example in which the map 20 is divided into a rectangular shape is mentioned, the shape in which the map 20 is divided is not limited to a rectangle, and the map 20 may be divided into any shape, such as a lattice or polygon. The number of divisions, size, and density of the blocks are not limited to the example illustrated in FIG. 7, and may be set to any values.

FIG. 8 is a diagram illustrating an example of the block data 13B. As illustrated in FIG. 8, the block data 13B may be data obtained by identification information of the blocks being associated with latitude and longitude. For example, referring to an example of a data entry in the first line, a latitude range of blocks identified by "A" is "$lat_{A1}$" to "$lat_{A2}$" and a longitude range is "$lon_{A1}$" to "$lon_{A2}$". Other data entries can be used to identify a block or a range included in the block in the same way as the data entry in the first line, even though the identification information and the values of latitude and longitude are different. Although it is exemplified as an example in FIG. 8 that the latitude and longitude ranges of the blocks are defined, the blocks can also be defined by representative points representing the blocks, such as a vertex, center, or center of gravity. In addition, size information such as height and width can be added in a case in which the size for each block is changed.

According to the block data 13B, the generation unit 15D generates the second history data 13C from the first history data 13A.

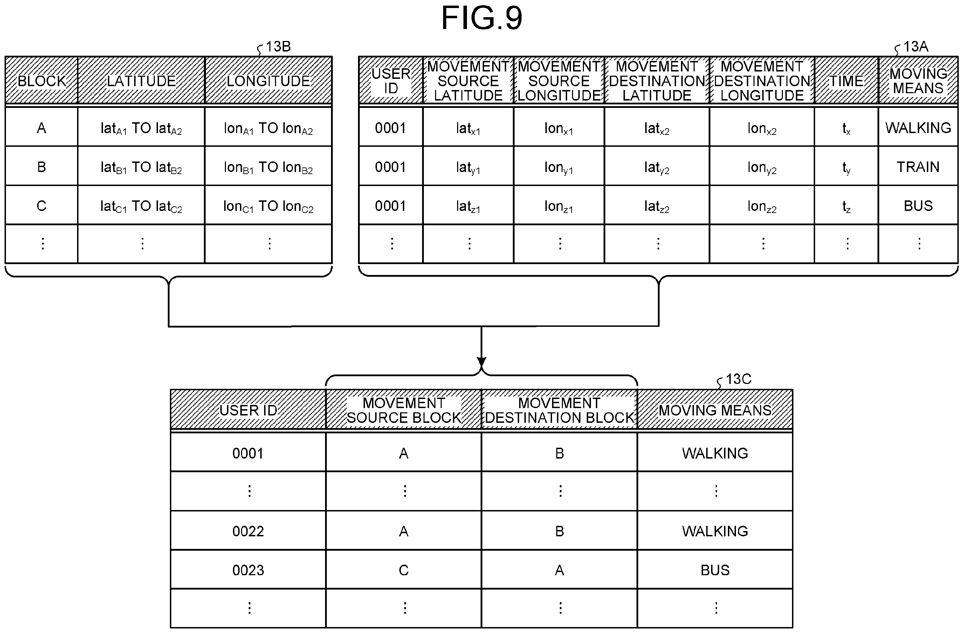

FIG. 9 is a schematic diagram illustrating an example of generating the second history data 13C. As illustrated in FIG. 9, the first history data 13A may include items such as a user identification (ID), a movement source latitude, a movement source longitude, a movement destination latitude, a movement destination longitude, a time, and moving means.

For each entry included in the first history data 13A, a movement source latitude, a movement source longitude, a movement destination latitude, and a movement destination longitude of the entry are collated with a latitude range and a longitude range of the block included in the block data 13B.

For example, in a case in which the entry in the first line of the first history data 13A is mentioned as an example, a block where a movement source latitude "$lat_{x1}$" is included in the latitude range of the block data 13B, and a movement source longitude "$lon_{x1}$" is included in the longitude range is retrieved. A block "A" that is found through such a retrieval is obtained as a movement source block. Furthermore, a block where a movement destination latitude "$lat_{x2}$" is included in the latitude range of the block data 13B, and a movement destination longitude "$lon_{x2}$" is included in the longitude range is retrieved. A block "B" that is found through such a retrieval is obtained as a movement destination block.

Thus, for each entry included in the first history data 13A, the movement source block, which includes the movement source latitude and the movement source longitude, and the movement destination block, which includes the movement destination latitude and the movement destination longitude, are retrieved.

Then, for each entry included in the first history data 13A, the generation unit 15D replaces the "movement source latitude" and the "movement source longitude" with the "movement source block" and replaces the "movement destination latitude" and the "movement destination longitude" with the "movement destination block".

As a result, the second history data 13C is generated from the first history data 13A. The second history data 13C generated from the first history data 13A is stored in the memory unit 13.

Here, the example in which the generation unit 15D generates the second history data 13C from the first history data 13A after the estimation unit 15C generates the first history data 13A is exemplified. However, the generation unit 15D may directly generate the second history data 13C without the first history data 13A.

The calculation unit 15E is a processing unit that calculates a difference between the selection frequency for the moving means in the statistical data corresponding to the data loss section and the selection frequency for the moving means in all of the histories of the individual user. As only an example, in a case in which it has been determined by the determination unit 15B that there is a location information loss, the calculation unit 15E sets a point x at which loss of the location information of a user i begins and a point y at which loss of the location information of the user i is ended as a data loss section xy.

Under the setting of the data loss section xy, the calculation unit 15E calculates a selection frequency $P^{any}_{xy}$ of moving means in statistical data corresponding to the data loss section xy by using the second history data 13C. Hereinbelow, the superscript notation of P in the selection frequency for the moving means refers to a designation of the user, while the subscript notation refers to a designation of a moving section as determined by the movement source block and the movement destination block.

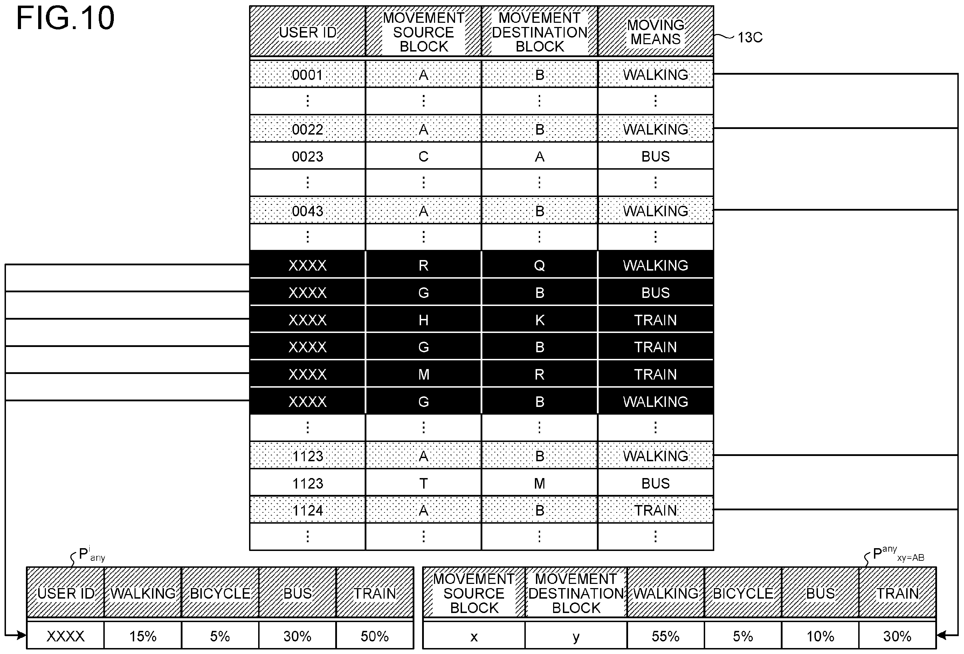

FIG. 10 is a schematic diagram illustrating an example of extracting a selection frequency for moving means. It is illustrated in FIG. 10 as an example that a point x at which loss of location information of the user i with a user ID "XXXX" begins is A (x = A), and a point y at which loss of the location information of the user i is ended (y = B) are set as the data loss section xy = AB. The second history data 13C illustrated in FIG. 10 is only an example, and a data structure thereof, including the number of entries, the number of fields, and codes for each field, is not limited to the example illustrated in the figure.

In this case, the calculation unit 15E extracts an entry corresponding to the data loss section xy = AB from all entries $P^{all}_{all}$ included in the second history data 13C. For example, an entry in which the movement source block is "A" and the movement destination block is "B" is extracted from the second history data 13C. According to the example illustrated in FIG. 10, entries with user IDs "0001", "0022", "0043", "1123" and "1124", that is, an entry group with hatched with dots are extracted. Then, for each entry corresponding to the data loss section AB, the calculation unit 15E increments the number of times of selection corresponding to the category "walking", "bicycle", "bus", or "train" of the moving means selected by the user in a history of the entry. The calculation unit 15E then calculates, for each category of the moving means, a ratio of a total value of the number of times of selection of the category to the total number of histories all of the data loss section AB. As a result, a selection frequency $P^{any}_{xy=AB}$ for the moving means in the statistical data, which corresponds to the data loss section xy = AB, is obtained.

The calculation unit 15E also calculates a selection frequency $P^{i}_{any}$ for the moving means of the individual user i in the entire moving section any by using the second history data 13C.

More specifically, the calculation unit 15E extracts an entry corresponding to the user ID "XXXX" corresponding to the user i out of all entries $P^{all}_{all}$ included in the second history data 13C. For example, in the example illustrated in FIG. 10, an entry group in which the moving section is unspecified and the user IDs are "XXXX" is extracted from the second history data 13C, that is, the entry group with black and white inverted. Then, for each entry corresponding to the user ID "XXXX", the calculation unit 15E increments the number of times of selection corresponding to the category "walking", "bicycle", "bus", or "train" of the moving means selected by the user i in a history of the entry. The calculation unit 15E then calculates, for each category of the moving means, a ratio of a total value of the number of times of selection of the category to the total number of histories all of the user i. As a result, the selection frequency $P^{i}_{any}$ for the moving means of the individual user i in the entire moving section any, is obtained.

The calculation unit 15E then calculates a difference $D^{i}_{xy}$ between the selection frequency $P^{any}_{xy}$ for the moving means corresponding to the data loss section xy in the statistical data and the selection frequency $P^{i}_{any}$ for the moving means of the individual user i in the entire moving section any.

The difference $D^{i}_{xy}$ between $P^{any}_{xy}$ and $P^{i}_{any}$ can be calculated according to any algorithm for calculating a distance or similarity between two pieces of data. As only an example, the difference $D^i_{xy}$ can be calculated by cos similarity according to the following Equation (1). "$H_j$" in Equation (1) below refers to the j-th histogram. As another example, the difference $D^i_{xy}$ can be calculated by the histogram intersection method according to the following Equation (2). "$H_j[k]$" in Equation (2) below refers to a value of the k-th element of the histogram $H_j$. As still another example, the difference $D^i_{xy}$ can be calculated by calculation of Kullback-Leibler (KL) divergence according to the following Equation (3). "$d_j$" in Equation (3) below refers to a density of the histogram $H_j$. Here, in a case in which the similarity is calculated, normalization can be performed to convert the calculated result of similarity into a difference.

$$\cos(H_1, H_2) = \frac{H_1 \cdot H_2}{\|H_1\| \|H_2\|} \tag{1}$$

$$HI = \frac{\sum_k min(H_1[k], H_2[k])}{\sum_k H_1[k]} \tag{2}$$

$$D_{KL}(d_1 \| d_2) = \sum_k d_1 \, log \frac{d_1}{d_2} \tag{3}$$

The synthesis unit 15F is a processing unit that synthesizes the selection frequency for the moving means in the statistical data corresponding to the data loss section with the selection frequency for the moving means in all of the histories of the individual user, on the basis of the difference between both selection frequencies. As one embodiment, the synthesis unit 15F sets a blend ratio at which the statistical data is synthesized to be lower and sets a blend ratio at which the personal data is synthesized to be higher as the difference $D^i_{xy}$ is increased. In addition, the synthesis unit 15F sets the blend ratio at which the statistical data is synthesized to be higher and sets the blend ratio at which the personal data is synthesized to be lower as the difference $D^i_{xy}$ is decreased. From an aspect of achieving such a blend ratios of the statistical data and the personal data, the synthesis unit 15F synthesizes the statistical data with the personal data according to the following Equation (4).

$$P^i_{xy} = D^i_{xy} \times P^i_{any} + \left(1 - D^i_{xy}\right) \times P^{any}_{xy} \tag{4}$$

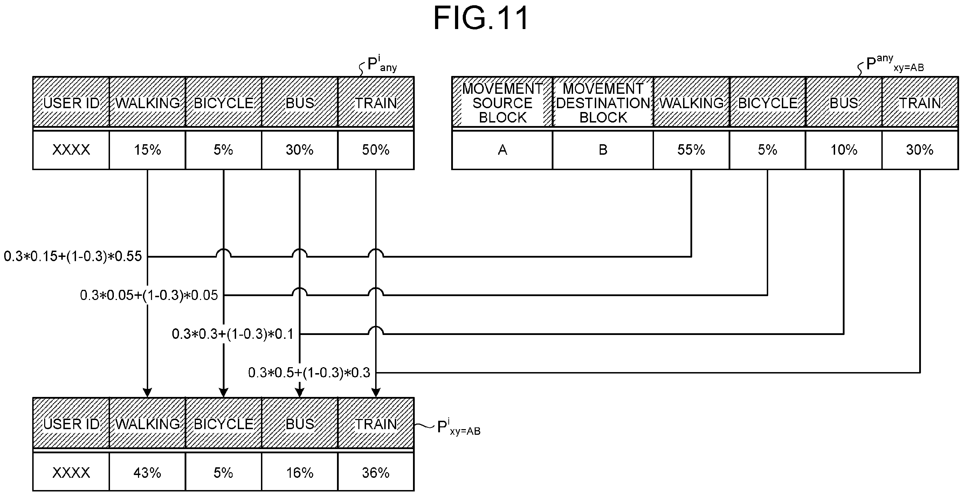

FIG. 11 is a schematic diagram illustrating an example of synthesizing the selection frequencies for the moving means. It is illustrated in FIG. 11 as an example that the selection frequency $P^{any}_{xy = AB}$ for the moving means in the statistical data illustrated in FIG. 10, and the selection frequency $P^i_{any}$ for the moving means of the individual user i illustrated in FIG. 10 are synthesized according to the above Equation (4). Hereinbelow, an example of calculation when selection ratios are synthesized for each category of the moving means will be described with an exemplified example in which the difference $D^i_{xy = AB}$ is calculated into 0.3 by the calculation unit 15E.

For example, in a case in which the category of the moving means is the "walking", $P^{any}_{xy = AB}$ is 0.55, $P^i_{any}$ is 0.15, and $D^i_{xy = AB}$ is 0.3, as illustrated in FIG. 11. In this case, the calculation "0.3 × 0.15 + (1 - 0.3) × 0.55" is used to synthesize the selection frequency $P^{any}_{xy = AB}$ and the selection frequency $P^i_{any}$ of the category "walking" for the moving means. As a result, 0.43 is obtained as an estimation value $P^i_{xy = AB}$ of the selection frequency for the moving means "walking" of the user i corresponding to the data loss section xy = AB.

In a case in which the category of the moving means is the "bicycle", $P^{any}_{xy = AB}$ is 0.05, $P^i_{any}$ is 0.05, and $D^i_{xy = AB}$ is 0.3, as illustrated in FIG. 11. In this case, the calculation "0.3 × 0.05 + (1 - 0.3) × 0.05" is used to synthesize the selection frequency $P^{any}_{xy = AB}$ and the selection frequency $P^i_{any}$ of the category "bicycle" for the moving means. As a result, 0.05 is obtained as an estimation value $P^i_{xy = AB}$ of the selection frequency for the moving means "bicycle" of the user i corresponding to the data loss section xy = AB.

In a case in which the category of the moving means is the "bus", $P^{any}_{xy = AB}$ is 0.1, $P^i_{any}$ is 0.3, and $D^i_{xy = AB}$ is 0.3, as illustrated in FIG. 11. In this case, the calculation "0.3 × 0.3 + (1 - 0.3) × 0.1" is used to synthesize the selection frequency $P^{any}_{xy = AB}$ and the selection frequency $P^i_{any}$ of the category "bus" for the moving means. As a result, 0.16 is obtained as an estimation value $P^i_{xy = AB}$ of the selection frequency for the moving means "bus" of the user i corresponding to the data loss section xy = AB.

In a case in which the category of the moving means is the "train", $P^{any}_{xy\,=\,AB}$ is 0.3, $P^i_{any}$ is 0.5, and $D^i_{xy\,=\,AB}$ is 0.3, as illustrated in FIG. 11. In this case, the calculation "$0.3 \times 0.5 + (1 - 0.3) \times 0.3$" is used to synthesize the selection frequency $P^{any}_{xy\,=\,AB}$ and the selection frequency $P^i_{any}$ of the category "train" for the moving means. As a result, 0.36 is obtained as an estimation value $P^i_{xy\,=\,AB}$ of the selection frequency for the moving means "train" of the user i corresponding to the data loss section xy = AB.

The above-described Equation (4) is an example for achieving the synthesis by using the blend ratio illustrated in FIG. 6, and is not limited thereto. For example, the synthesis by using the blend ratio illustrated in FIG. 6 may be achieved with a function f ($P^{any}_{xy}$, $P^i_{any}$, $D^i_{xy}$) and a look-up table in which a correspondence relationship between the difference and the blend ratio is defined for each of the statistical data and the personal data.

The recommendation unit 15G is a processing unit that outputs recommendations to the client terminal 30. As one aspect, in a case in which there is no location information loss, the recommendation unit 15G outputs a recommendation to the client terminal 30 based on the estimation result of the moving means of the user, which is obtained from the estimation unit 15C. As another aspect, in a case in which the location information is lost, the recommendation unit 15G outputs a recommendation to the client terminal 30 based on an estimation value $P^i_{xy}$ of the selection frequency for the moving means of the user i, which is output from the synthesis unit 15F. In this case, the recommendation unit 15G can, as an example, make a recommendation corresponding to the category of the moving means that has the largest estimation value of the selection frequency out of the categories of the moving means.

The above-described recommendation can target any object. As only an example, a case in which a store recommendation is performed is exemplified. In this case, assuming that the moving means is the "car", information about stores with a parking lot is more valuable to the user than information about stores without a parking lot. In addition, assuming that the moving means is the "train", information about stores near a station is more valuable to the user than information about stores far from a station. In this way, the extraction, calculation, or generation of a recommendation appropriate for the user according to the moving means is executed to output the recommendation to the client terminal 30.

Processing Flow

Next, the processing flow of the server device 10 according to the present embodiment will be described. Here, (1) an explanation of overall processing executed by the server device 10 will be first described, and then (2) a second moving means estimation process will be described.

(1) Overall Processing

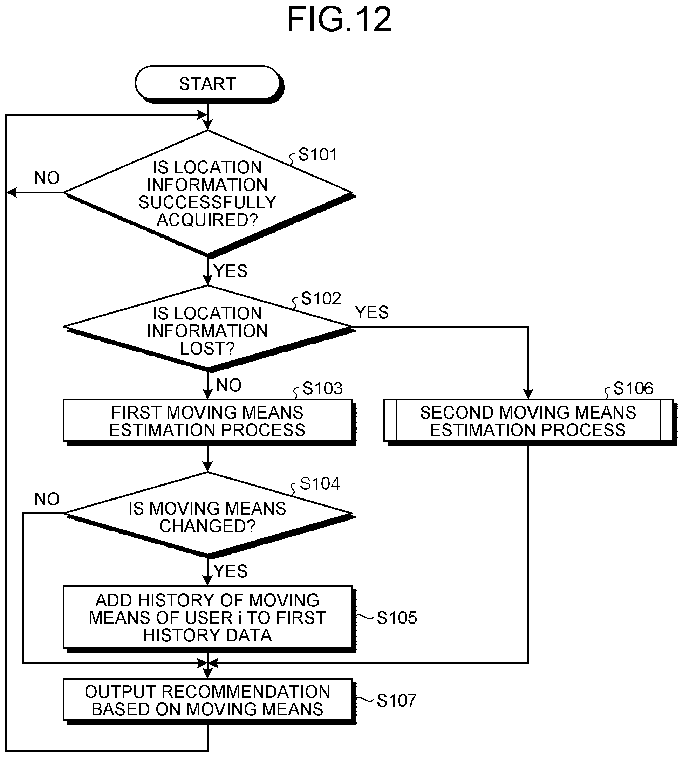

FIG. 12 is a flowchart illustrating processing of all of the processes. This processing is only an example, and can be executed in parallel with other processing for each session in which a connection with an application program running on the client terminal 30 is established.

As illustrated in FIG. 12, in a case in which the location information is successfully acquired from the client terminal 30 (Yes at step S101), the determination unit 15B determines whether or not there is any location information loss before the location information is acquired (step S102).

In a case in which it is determined that there is no location information loss (No at step S102), the estimation unit 15C executes the following process. That is, the estimation unit 15C executes a "first moving means estimation process" of estimating moving means of the user i having the client terminal 30 based on time series data on location information including the location information acquired at step S101 (step S103).

In a case in which the estimation result of the moving means obtained at step S103 is changed from the previous estimation result of the moving means (Yes at step S104), the estimation unit 15C executes the following process. In other words, the estimation unit 15C generates a new entry with one segment of a moving range for a period in which the estimation result of the moving means in the same category is obtained to add the new entry to the first history data 13A stored in the memory unit 13 (step S105). In a case in which there is no change from the previous estimation result of the moving means (No at step S104), the above-described process at step S105 is skipped.

On the other hand, in a case in which it is determined that the location information is lost (Yes at step S102), a "second moving means estimation process" of estimating the selection frequency for the moving means of the user i corresponding to the data loss section xy is executed (step S106).

Thereafter, the recommendation unit 15G outputs a recommendation to the client terminal 30, based on the estimation result of the moving means of the user obtained at step S103 or the estimation value $P^i_{xy}$ of the selection frequency for moving means of the user i obtained at step S106 (step S107). In a case in which the recommendation is output to the client terminal 30, a process at step S101 starts.

(2) Second Moving Means Estimation Process

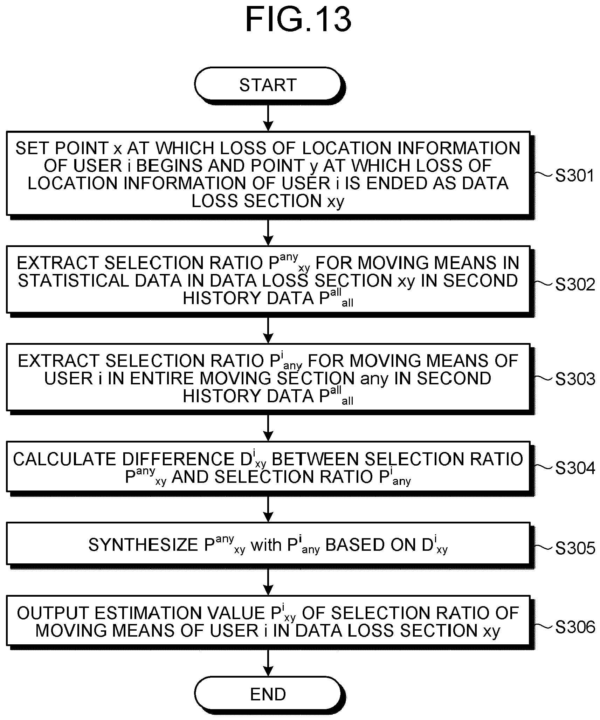

FIG. 13 is a flowchart illustrating processing of the second moving means estimation process. This process corresponds to the process at step S106 illustrated in FIG. 12 and can be executed, for example, in a case in which it is determined that the location information is lost (Yes at step S102).

As illustrated in FIG. 13, the calculation unit 15E sets a point x at which loss of location information of the user i begins and a point y at which loss of the location information of the user i is ended as the data loss section xy (step S301).

Subsequently, the calculation unit 15E calculates a selection frequency $P^{any}_{xy}$ for the moving means in the statistical data corresponding to the data loss section xy by using the second history data 13C (step S302). Furthermore, the calculation unit 15E also calculates a selection frequency $P^{i}_{any}$ for the moving means of the individual user i in the entire moving section any by using the second history data 13C (step S303).

Furthermore, the calculation unit 15E calculates a difference $D^{i}_{xy}$ between the selection frequency $P^{any}_{xy}$ for the moving means corresponding to the data loss section xy in the statistical data and the selection frequency $P^{i}_{any}$ for the moving means of the individual user i in the entire moving section any (step S304).

Thereafter, the synthesis unit 15F synthesizes the selection frequency $P^{any}_{xy}$ for the moving means corresponding to the data loss section xy in the statistical data with the selection frequency $P^{i}_{any}$ for the moving means of the individual user i in the entire moving section any, on the basis of the difference $D^{i}_{xy}$ between both selection frequencies (step S305).

The synthesis unit 15F then outputs an estimation value $P^{i}_{xy}$ of the selection frequency for the moving means of the user i, which is obtained by synthesis at step S305, to the recommendation unit 15G (step S306), and the process ends.

One Aspect of Effect

As described above, the server device 10 according to the present embodiment sets a blend ratio of a selection frequency for the moving means in all of the histories of the individual user to a selection frequency for the moving means in the statistical data corresponding to the data loss section, according to the differences between the statistical data and the personal data in the selection frequencies for the moving means. Therefore, according to the present embodiment, the server device 10 can reasonably reflect the personal characteristics of the user to the estimation result of the moving means in the data loss section.

Second Embodiment

The embodiment of the disclosed device has been described so far, but the present invention may be implemented in a variety of different forms in addition to the embodiment described above. Therefore, another embodiment included in the present invention is described below.

Filtering of Statistical Data

In the first embodiment described above, although the example in which all of the entries corresponding to the data loss section xy are extracted from all of the entries $P^{all}_{all}$ included in the second history data 13C is exemplified in the process at step S302 illustrated in FIG. 13, the present embodiment is not limited thereto. For example, at step S302, entries that correspond to the data loss section xy and that include user attribute information satisfying predetermined conditions can be extracted. As only an example, the calculation unit 15E can also extract entries of other users that correspond to the data loss section xy and that are associated with an address corresponding to the data loss section xy. In this case, histories of other users whose data loss section xy is the local area can be extracted. As another example, the calculation unit 15E extracts histories of other users that correspond to the data loss section xy and whose similarity to an attribute of the user i, such as sex and age, is equal to or more than a threshold value. In this case, histories of other users who have the same sex or generation as the user i does can be extracted.

Distribution and Integration

In addition, each component of each device illustrated in the figures need not be physically configured as illustrated in the figures. In other words, the specific form of distribution and integration of individual devices is not limited to that illustrated in the figures, and all or some of the individual devices can be configured to be functionally or physically distributed and integrated into any unit according to various loads and usage conditions. For example, the acquisition unit 15A, the determination unit 15B, the estimation unit 15C, the generation unit 15D, the calculation unit 15E, the synthesis unit 15F, or the recommendation unit 15G may be connected via a network as an external device of the server device 10. In addition, the acquisition unit 15A, the determination unit 15B, the estimation unit 15C, the generation unit 15D, the calculation unit 15E, the synthesis unit 15F, and the recommendation unit 15G may be included in different devices respectively, to achieve the functions of the server device 10 with connection via the network and cooperating with each other.

Hardware Configuration

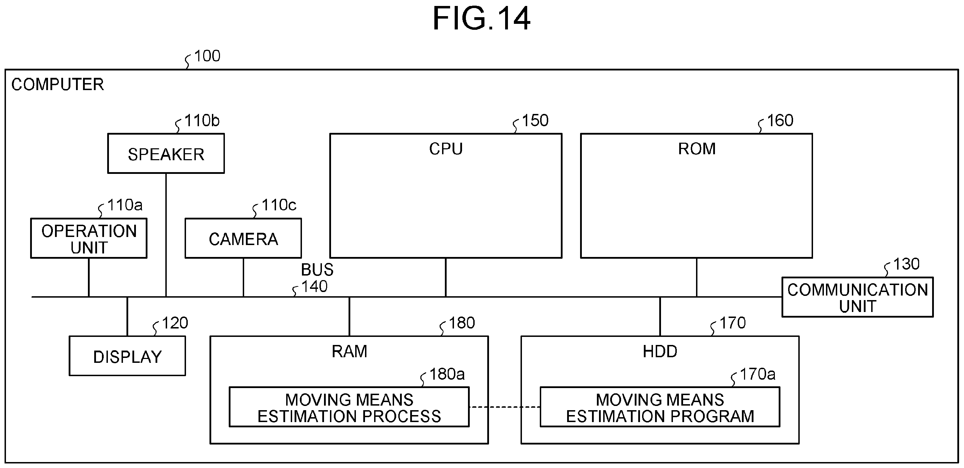

The various processes described in the above-described embodiments can be achieved by causing a computer, such as a personal computer or workstation, to execute a computer program prepared in advance. Hereinbelow, an example of a computer executing a moving means estimation program with the same functions as in the first embodiment and the second embodiment is described with FIG. 14.

FIG. 14 is a diagram illustrating a configuration example of hardware. As illustrated in FIG. 14, a computer 100 includes an operation unit 110a, a speaker 110b, a camera 110c, a display 120, and a communication unit 130. Furthermore, this computer 100 includes a CPU 150, a ROM 160, an HDD 170, and a RAM 180. Each of these components 110 to 180 is connected via a bus 140.

As illustrated in FIG. 14, the HDD 170 stores therein a ** unit illustrated in the first embodiment described above and a moving means estimation program 170a, which performs the same function as the ** unit does. This moving means estimation program 170a may be integrated or distributed as in each of the components of the acquisition unit 15A, the determination unit 15B, the estimation unit 15C, the generation unit 15D, the calculation unit 15E, the synthesis unit 15F, and the recommendation unit 15G illustrated in FIG. 1. In other words, the HDD 170 need not store therein all of the data illustrated in the first embodiment described above, and only the data used for the processes may be stored in the HDD 170.

In this environment, the CPU 150 reads the moving means estimation program 170a from the HDD 170 and then load it in the RAM 180. As a result, the moving means estimation program 170a functions as a moving means estimation process 180a, as illustrated in FIG. 14. This moving means estimation process 180a loads various data read from the HDD 170 to an area allocated to the moving means estimation process 180a in a memory area included in the RAM 180, and executes various processes by using the loaded various data. For example, an example of the processes executed by the moving means estimation process 180a may include processes illustrated in FIG. 12 and FIG. 13. In the CPU 150, all of the processing units illustrated in the first embodiment described above need not operate, and processing units that correspond to processes to be executed may be virtually achieved.

Preferably, the above-described moving means estimation program 170a is not stored in the HDD 170 or the ROM 160 from the beginning. For example, the moving means estimation program 170a is stored in a "portable physical medium", such as a flexible disk, what is called an FD, a CD-ROM, a DVD disc, a magneto-optical disk, or an IC card, which is inserted into the computer 100. The computer 100 may then acquire and execute the moving means estimation program 170a from the portable physical medium. The moving means estimation program 170a is stored in another computer, server device, or the like that is connected to the computer 100 via a public line, the Internet, LAN, WAN, or the like, in advance. The stored moving means estimation program 170a may be downloaded to the computer 100 and then executed.

**Claims**

1. A moving means estimating method comprising:

   first calculating(S302) first data in which a selection frequency for moving means in a loss section where location information of a user terminal is lost is calculated for each category of the moving means, by totalizing the number of times of selection corresponding to categories of moving means for each history that corresponds to the loss section, in history data in which a combination of blocks into which an area is divided is associated with a history of the moving means;
   second calculating(S303) second data in which a selection frequency for moving means of an individual user having the user terminal is calculated for each category of the moving means, by totalizing the number of times of selection corresponding to categories of moving means for each history that corresponds to the user terminal, in the history data; and
   synthesizing(S305) the selection frequency for the moving means in the first data with the selection frequency for the moving means in the second data, based on a difference between the selection frequency for the moving means in the first data and the selection frequency for the moving means in the second data.

2. The moving means estimating method according to claim 1, wherein the synthesizing includes setting(S305) a ratio at which the first data is synthesized to be lower and setting a ratio at which the second data is synthesized to be higher, as the difference increases, and setting(S305) the ratio at which the first data is synthesized to be higher and setting the ratio at which the second data is synthesized to be lower, as the difference decreases.

3. The moving means estimating method according to claim 1, further including outputting(S107) a recommendation based on at least one selection frequency for moving means synthesized at the synthesizing.

4. The moving means estimating method according to claim 3, wherein the outputting includes outputting(S107) a recommendation corresponding to a category of moving means with a largest selection frequency out of the selection frequencies for the moving means synthesized at the synthesizing.

5. A moving means estimating program that causes a computer to execute a process comprising:

first calculating(S302) first data in which a selection frequency for moving means in a loss section where location information of a user terminal is lost is calculated for each category of the moving means, by totalizing the number of times of selection corresponding to categories of moving means for each history that corresponds to the loss section, in history data in which a combination of blocks into which an area is divided is associated with a history of the moving means;
second calculating(S303) second data in which a selection frequency for moving means of an individual user having the user terminal is calculated for each category of the moving means, by totalizing the number of times of selection corresponding to categories of moving means for each history that corresponds to the user terminal, in the history data; and
synthesizing(S305) the selection frequency for the moving means in the first data with the selection frequency for the moving means in the second data, based on a difference between the selection frequency for the moving means in the first data and the selection frequency for the moving means in the second data.

6. The moving means estimating program according to claim 5, wherein the synthesizing includes setting(S305) a ratio at which the first data is synthesized to be lower and setting a ratio at which the second data is synthesized to be higher, as the difference increases, and setting(S305) the ratio at which the first data is synthesized to be higher and setting the ratio at which the second data is synthesized to be lower, as the difference decreases.

7. The moving means estimating program according to claim 5, wherein the process further includes outputting(S107) a recommendation based on at least one selection frequency for moving means synthesized at the synthesizing.

8. The moving means estimating program according to claim 7, wherein the outputting includes outputting(S107) a recommendation corresponding to a category of moving means with a largest selection frequency out of the selection frequencies for the moving means synthesized at the synthesizing.

9. A moving means estimation device(10) comprising:

a first calculation unit(15E) configured to calculate first data in which a selection frequency for moving means in a loss section where location information of a user terminal is lost is calculated for each category of the moving means, by totalizing the number of times of selection corresponding to categories of moving means for each history that corresponds to the loss section, in history data in which a combination of blocks into which an area is divided is associated with a history of the moving means;
a second calculation unit(15E) configured to calculate second data in which a selection frequency for moving means of an individual user having the user terminal is calculated for each category of the moving means, by totalizing the number of times of selection corresponding to categories of moving means for each history that corresponds to the user terminal, in the history data; and
a synthesis unit(15F) configured to synthesize the selection frequency for the moving means in the first data with the selection frequency for the moving means in the second data, based on a difference between the selection frequency for the moving means in the first data and the selection frequency for the moving means in the second data.

10. The moving means estimation device according to claim 9, wherein the synthesis unit(15F) sets a ratio at which the first data is synthesized to be lower and sets a ratio at which the second data is synthesized to be higher, as the difference increases, and sets the ratio at which the first data is synthesized to be higher and sets the ratio at which the second data is synthesized to be lower, as the difference decreases.

**11.** The moving means estimation device according to claim 9, further including a recommendation unit(15G) configured to output a recommendation based on at least one selection frequency for moving means synthesized by the synthesis unit(15F).

**12.** The moving means estimation device according to claim 11, wherein the recommendation unit(15G) outputs a recommendation corresponding to a category of moving means with a largest selection frequency out of the selection frequencies for the moving means synthesized by the synthesis unit(15F).

# FIG.1

SERVER DEVICE — 10

CLIENT TERMINAL — 30

NW

COMMUNICATION CONTROL UNIT — 11

CONTROL UNIT — 15
- ACQUISITION UNIT — 15A
- DETERMINATION UNIT — 15B
- ESTIMATION UNIT — 15C
- GENERATION UNIT — 15D
- CALCULATION UNIT — 15E
- SYNTHESIS UNIT — 15F
- RECOMMENDATION UNIT — 15G

MEMORY UNIT — 13
- FIRST HISTORY DATA — 13A
- BLOCK DATA — 13B
- SECOND HISTORY DATA — 13C

EP 4 296 915 A1

# FIG.2

# FIG.3

# FIG.4

# FIG.5

# FIG.6

EP 4 296 915 A1

# FIG.7

# FIG.8

| BLOCK | LATITUDE | LONGITUDE |
|-------|----------|-----------|
| A | $lat_{A1}$ TO $lat_{A2}$ | $lon_{A1}$ TO $lon_{A2}$ |
| B | $lat_{B1}$ TO $lat_{B2}$ | $lon_{B1}$ TO $lon_{B2}$ |
| C | $lat_{C1}$ TO $lat_{C2}$ | $lon_{C1}$ TO $lon_{C2}$ |
| ... | ... | ... |

# FIG.9

**13B**

| BLOCK | LATITUDE | LONGITUDE |
|---|---|---|
| A | $lat_{A1}$ TO $lat_{A2}$ | $lon_{A1}$ TO $lon_{A2}$ |
| B | $lat_{B1}$ TO $lat_{B2}$ | $lon_{B1}$ TO $lon_{B2}$ |
| C | $lat_{C1}$ TO $lat_{C2}$ | $lon_{C1}$ TO $lon_{C2}$ |
| ⋮ | ⋮ | ⋮ |

**13A**

| USER ID | MOVEMENT SOURCE LATITUDE | MOVEMENT SOURCE LONGITUDE | MOVEMENT DESTINATION LATITUDE | MOVEMENT DESTINATION LONGITUDE | TIME | MOVING MEANS |
|---|---|---|---|---|---|---|
| 0001 | $lat_{x1}$ | $lon_{x1}$ | $lat_{x2}$ | $lon_{x2}$ | $t_x$ | WALKING |
| 0001 | $lat_{y1}$ | $lon_{y1}$ | $lat_{y2}$ | $lon_{y2}$ | $t_y$ | TRAIN |
| 0001 | $lat_{z1}$ | $lon_{z1}$ | $lat_{z2}$ | $lon_{z2}$ | $t_z$ | BUS |
| ⋮ | ⋮ | ⋮ | ⋮ | ⋮ | ⋮ | ⋮ |

**13C**

| USER ID | MOVEMENT SOURCE BLOCK | MOVEMENT DESTINATION BLOCK | MOVING MEANS |
|---|---|---|---|
| 0001 | A | B | WALKING |
| ⋮ | ⋮ | ⋮ | ⋮ |
| 0022 | A | B | WALKING |
| 0023 | C | A | BUS |
| ⋮ | ⋮ | ⋮ | ⋮ |

# FIG.10

| USER ID | MOVEMENT SOURCE BLOCK | MOVEMENT DESTINATION BLOCK | MOVING MEANS |
|---|---|---|---|
| 0001 | A | B | WALKING |
| ⋮ | ⋮ | ⋮ | ⋮ |
| 0022 | A | B | WALKING |
| 0023 | C | A | BUS |
| ⋮ | ⋮ | ⋮ | ⋮ |
| 0043 | A | B | WALKING |
| ⋮ | ⋮ | ⋮ | ⋮ |
| XXXX | R | Q | WALKING |
| XXXX | G | B | BUS |
| XXXX | H | K | TRAIN |
| XXXX | G | B | TRAIN |
| XXXX | M | R | TRAIN |
| XXXX | G | B | WALKING |
| ⋮ | ⋮ | ⋮ | ⋮ |
| 1123 | A | B | WALKING |
| 1123 | T | M | BUS |
| 1124 | A | B | TRAIN |
| ⋮ | ⋮ | ⋮ | ⋮ |

13C

$P^i_{any}$

| USER ID | WALKING | BICYCLE | BUS | TRAIN |
|---|---|---|---|---|
| XXXX | 15% | 5% | 30% | 50% |

$P^{any}_{xy=AB}$

| MOVEMENT SOURCE BLOCK | MOVEMENT DESTINATION BLOCK | WALKING | BICYCLE | BUS | TRAIN |
|---|---|---|---|---|---|
| x | y | 55% | 5% | 10% | 30% |

EP 4 296 915 A1

# FIG.11

$P^i_{any}$

| USER ID | WALKING | BICYCLE | BUS | TRAIN |
|---------|---------|---------|-----|-------|
| XXXX | 15% | 5% | 30% | 50% |

$P^{any}_{xy=AB}$

| MOVEMENT SOURCE BLOCK | MOVEMENT DESTINATION BLOCK | WALKING | BICYCLE | BUS | TRAIN |
|---------|---------|---------|-----|-----|-------|
| A | B | 55% | 5% | 10% | 30% |

$0.3*0.15+(1-0.3)*0.55$

$0.3*0.05+(1-0.3)*0.05$

$0.3*0.3+(1-0.3)*0.1$

$0.3*0.5+(1-0.3)*0.3$

| USER ID | WALKING | BICYCLE | BUS | TRAIN |
|---------|---------|---------|-----|-------|
| XXXX | 43% | 5% | 16% | 36% |

$P^i_{xy=AB}$

# FIG.12

START

S101 — IS LOCATION INFORMATION SUCCESSFULLY ACQUIRED?
NO
YES

S102 — IS LOCATION INFORMATION LOST?
YES
NO

S103 — FIRST MOVING MEANS ESTIMATION PROCESS

S106 — SECOND MOVING MEANS ESTIMATION PROCESS

S104 — IS MOVING MEANS CHANGED?
NO
YES

S105 — ADD HISTORY OF MOVING MEANS OF USER i TO FIRST HISTORY DATA

S107 — OUTPUT RECOMMENDATION BASED ON MOVING MEANS

# FIG.13

```
                    ┌─────────────┐
                    │    START    │
                    └──────┬──────┘
                           │
                           ▼
```

SET POINT x AT WHICH LOSS OF LOCATION INFORMATION OF USER i BEGINS AND POINT y AT WHICH LOSS OF LOCATION INFORMATION OF USER i IS ENDED AS DATA LOSS SECTION xy ～S301

EXTRACT SELECTION RATIO $P^{any}_{xy}$ FOR MOVING MEANS IN STATISTICAL DATA IN DATA LOSS SECTION xy IN SECOND HISTORY DATA $P^{all}_{all}$ ～S302

EXTRACT SELECTION RATIO $P^i_{any}$ FOR MOVING MEANS OF USER i IN ENTIRE MOVING SECTION any IN SECOND HISTORY DATA $P^{all}_{all}$ ～S303

CALCULATE DIFFERENCE $D^i_{xy}$ BETWEEN SELECTION RATIO $P^{any}_{xy}$ AND SELECTION RATIO $P^i_{any}$ ～S304

SYNTHESIZE $P^{any}_{xy}$ with $P^i_{any}$ BASED ON $D^i_{xy}$ ～S305

OUTPUT ESTIMATION VALUE $P^i_{xy}$ OF SELECTION RATIO OF MOVING MEANS OF USER i IN DATA LOSS SECTION xy ～S306

```
                    ┌─────────────┐
                    │     END     │
                    └─────────────┘
```

# FIG.14

COMPUTER 100

SPEAKER 110b

OPERATION UNIT 110a

CAMERA 110c

CPU 150

ROM 160

BUS 140

COMMUNICATION UNIT 130

DISPLAY 120

RAM 180

MOVING MEANS ESTIMATION PROCESS 180a

HDD 170

MOVING MEANS ESTIMATION PROGRAM 170a

EP 4 296 915 A1

Europäisches
Patentamt

European
Patent Office

Office européen
des brevets

# EUROPEAN SEARCH REPORT

**Application Number**

EP 23 16 1173

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/197890 A1 (IDE NAOKI [JP] ET AL) 1 August 2013 (2013-08-01) * paragraphs [0001], [0110], [0111], [0124], [0214], [0215], [0301], [0544], [0568] – [0570] * | 1–12 | INV. G06Q10/04 G06Q10/0833 |

TECHNICAL FIELDS
SEARCHED (IPC)

G06Q

The present search report has been drawn up for all claims

| Place of search | Date of completion of the search | Examiner |
|---|---|---|
| Munich | 18 October 2023 | Breidenich, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 1173

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2023

| Patent document cited in search report | | Publication date | Patent family member(s) | | Publication date |
|---|---|---|---|---|---|
| US 2013197890 | A1 | 01-08-2013 | CN | 103201754 A | 10-07-2013 |
| | | | EP | 2642431 A1 | 25-09-2013 |
| | | | JP | 2012108748 A | 07-06-2012 |
| | | | US | 2013197890 A1 | 01-08-2013 |
| | | | WO | 2012066951 A1 | 24-05-2012 |

EPO FORM P0459

For more details about this annex : see Official Journal of the European Patent Office, No. 12/82

**EP 4 296 915 A1**

**Patent documents cited in the description**

- JP 2012221354 A
- JP 2020160960 A
- WO 2013179359 A